**Europäisches Patentamt**

**European Patent Office**

**Office européen des brevets**

(11) Veröffentlichungsnummer: **0 229 881 B1**

(12) **EUROPÄISCHE PATENTSCHRIFT**

(45) Veröffentlichungstag der Patentschrift:
20.12.89

(51) Int. Cl.⁴: **B60K 17/04**

(21) Anmeldenummer: **86113637.2**

(22) Anmeldetag: **02.10.86**

(54) Drehmomentenübertragung in einem angetriebenen Kraftfahrzeugrad.

(30) Priorität: 20.12.85 DE 3545497
15.02.86 DE 3604810

(43) Veröffentlichungstag der Anmeldung:
29.07.87 Patentblatt 87/31

(45) Bekanntmachung des Hinweises auf die Patenterteilung:
20.12.89 Patentblatt 89/51

(84) Benannte Vertragsstaaten:
AT BE CH DE ES FR GB GR IT LI LU NL SE

(56) Entgegenhaltungen:
EP-A- 0 218 903
DE-A- 3 409 100
US-A- 3 865 207

(73) Patentinhaber: MAN Nutzfahrzeuge Aktiengesellschaft,
Dachauer Strasse 667 Postfach 50 06 20,
D-8000 München 50(DE)

(72) Erfinder: Drewitz, Hans Jürgen, Agnesstrasse 59,
D-8000 München 40(DE)
Erfinder: Thudt, Hubert, Adenauerstrasse 32,
D-8039 Puchheim/Bhf(DE)

**Beschreibung**

Die Erfindung bezieht sich auf eine Vorrichtung zum wahlweisen Zu- und Abschalten des Drehmomentenflusses zur Radnabe eines angetriebenen Kraftfahrzeugrades mittels Druckluft und Zuführung der Druckluft durch den stationären Radlagerzapfen in einen Pneumatikraum, wobei die Antriebswelle von der Radnabe mittels einer Kupplungseinrichtung trennbar ist und eine Schalteinheit vorgesehen ist, die über den Pneumatikraum beaufschlagt werden kann, die Rückstellkraft über Feder wirksam und die Schalteinheit in einer mit der Radnabe fest verbundenen Glockennabe angeordnet ist.

Radseitige Nabenschaltungen durch Klauenkupplungen, die wahlweise die Antriebsachse mit der Radnabe verbinden oder lösen, sind allgemein bekannt. Die üblichen Lösungen, z.B. nach der FR-OS 2 464 163, bestehen in der achsaußenseitigen Anbringung einer gekapselten, pneumatisch oder mechanisch betätigbaren Steuerungseinrichtung. Durch die in der Steuerungseinrichtung integrierte Schalteinheit mit Kupplungsklauen, Rückholfedern und irgendwie generiertem Pneumatikraum kann eine wahlweise lösbare Verbindung mit der Antriebswelle erreicht werden. Bei der konstruktiven Lösung gemäß diesem Prinzip ergeben sich jedoch folgende Nachteile:

- Verbreiterung der Achse über das Normalmaß von 2500 mm hinaus, infolge eines notwendigen achsaußenseitigen Anbringens der gekapselten Steuerungseinrichtung.
- Probleme bei der Schaffung von Durchgangsmöglichkeiten für die benötigte Druckluftversorgung durch die Ebene der Klauenkupplung.
- Das Einbringen der Druckluftleitung ist in praxi nicht oder nur mit erheblichen Schwierigkeiten durchführbar.

Der Erfindung liegt die Aufgabe zugrunde, eine gattungsgemäße Einrichtung unter Vermeidung einer Achsverlängerung zu schaffen.

Dies wird erfindungsgemäß dadurch erreicht, daß die Schalteinheit und der Pneumatikraum zwischen den Kegelrollenlagern angeordnet ist und der Pneumatikraum über im Radlagerzapfen angeordneten Zuleitungen sowie über eine umlaufende Nut und über eine vertikale Öffnung speisbar ist. Solcherart wird eine platzsparende Konstruktion erzielt und es wird – das ist von erheblicher Bedeutung – eine Verlängerung der Achse über das Normmaß vermieden, wobei die erfindungsgemäße Einrichtung ohne wesentliche, den Serienbau beeinträchtigende Umkonstruktionen, eingeplant werden kann. Zur Ausgestaltung der Erfindung ist der Achswelle einstückig ein Klauenteller mit Klauen angeformt. Auf diese Weise werden mehrere Einzelteile und die damit verbundenen formschlüssigen, Verschleiß ausgesetzten Verbindungen, vermieden. Nach einem wesentlichen Merkmal der Erfindung sind durch Ausnehmungen, vorzugsweise gegenüberliegende, im Zylindermantel des Kupplungszylinders Mantelsegmente gebildet, wobei die Ausnehmungen von ortsfesten Stegen der Glockennabe durchdrungen sind.

Solcherart wird die notwendige Längsverschieblichkeit des Kupplungszylinders auch innerhalb des Raumes der Kegelrollenlager ermöglicht. Die Schalteinheit besteht im wesentlichen aus dem Kupplungskörper, dem Kugellager, dem äußeren Dichtungszylinder und einem Runddichtring, wobei der Dichtungszylinder auf den Dichtungskolben längsverschieblich angeordnet ist, wie auch der Pneumatikraum mittels mehrerer Runddichtungen luft- und öldicht verschlossen ist. Diese Zuordnung der Einzelelemente trägt dazu bei, eine sichere Kupplungsfunktion zu erzielen und den Pneumatikraum gegen das Eindringen von Öl zu schützen. Nach einem wesentlichen Merkmal der Erfindung ist bei Ineingriffstellung der Kupplungsklauen der Kraftschluß von der Achswelle über die Klauenteller sowie über eine Vielkeilverzahnung unter Zwischenschaltung des Zahnnabenringes und der Glockennabe auf die Radnabe gegeben. Vorteil dieser Anordnung ist es, auf gedrungenem Raum sowohl Kupplungs- wie auch Kraftübertragungselemente unterzubringen.

Weitere Merkmale und Vorteile der Erfindung sind den Ansprüchen, der Beschreibung und den Zeichnungen zu entnehmen. Die Erfindung ist in zwei Ausführungsbeispielen dargestellt.

Es zeigt:

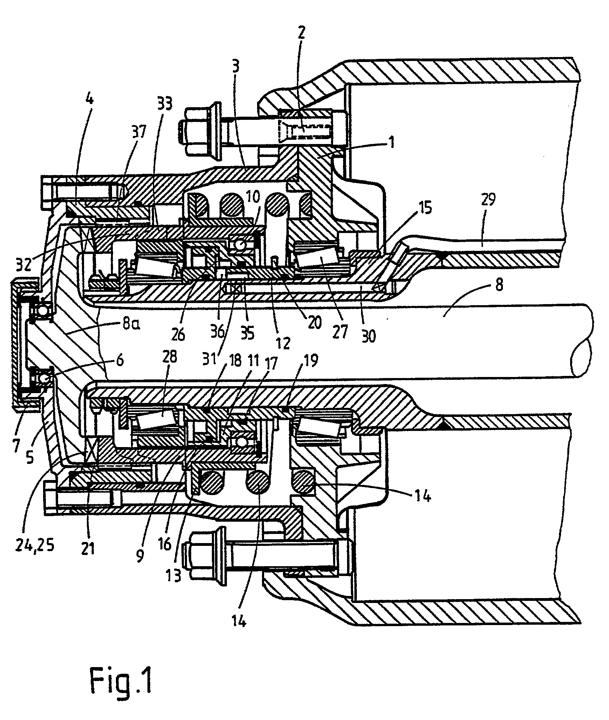

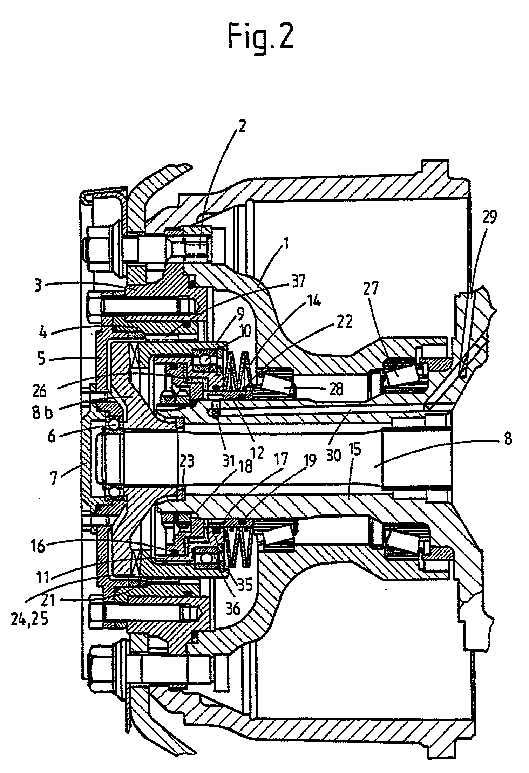

Fig. 1 einen Längsschnitt durch die komplette Radnabe mit Kupplungseinrichtung.

An der Radnabe (1) ist mittels Schrauben (2) die Glockennabe (3) befestigt. Radnabe und Glockennabe bilden zusammen das Lagergehäuse für die Kegelrollenlager (27, 28). Mit der Glockennabe ist der Zahnnabenring (4) gemeinsam mit dem Abschlußdeckel (5) verbunden. Der Abschlußdeckel (5) bildet gleichzeitig das Lagergehäuse für die achsaußenseitige Steckwellenlagerung (6) der Achswelle (8). Der Verschlußdeckel (7) verschließt den Abschlußdeckel. Die Achswelle (8) läuft in einem mit in axialer Richtung vorstehenden Mitnehmerklauen (24) versehenen Klauenteller (8a) aus und ist über einen Zapfen in Abschlußdeckel (7) gelagert. Die Schalteinheit mit integriertem Pneumatikraum (26), bestehend aus Kupplungszylinder (9) mit Mitnehmerklauen (25), Dichtungszylinder (11), Dichtungskolben (12), und Feder (14), ist innerhalb der Glockennabe (3) angeordnet. Der Kupplungszylinder (9) ist hierbei derart gestaltet, daß er außerhalb der Kegelrollenlagerung (27, 28) mit seinen, auf dem durchgehend zylindrischen Teil frontal angeordneten Mitnehmerklauen (25) in die Klauen (24) des Klauenteller (8a) der Achswelle (8) eingreifen kann, während die radial auf dem zylindrischen Teil befindliche Vielkeilverzahnung, axialverschiebbar, sich im ständigen Eingriff mit dem Zahnnabenring (4) befindet. Die durch je zwei gegenüberliegende Ausnehmungen (32) im Zylindermantel des Kupplungszylinders gebildeten vier Mantelsegmente durchdringen in vier entsprechenden Durchbrüchen den Steg (33) der von der Glockennabe ausgehenden Halterung für das Kegelrollenlager (28) und bilden den äußeren Gehäusering des Ausrückrillenkugellagers (10). Durch die Runddichtringe (16) und (17) und den entsprechenden Dichtungsflächen zwischen dem Dichtungszylinder und den Dichtungskolben wird der Verdrängungsraum zur pneumatischen Ansteuerung der Entkupplung gebildet. Durch die Runddichtringe (18) und (19) zwischen Dichtungskolben (12) und Radlagerzapfen (15) wird die Druckluftzuführung gegenüber dem Ölbad der Radnabe (1) abgedichtet. Die Druckluftzuführung zum Pneumatikraum erfolgt über die Bohrungen (29, 30, 31) in eine umlaufende Ringnut des Dichtungskolbens (12) und von dort durch die vertikale Öffnung (36) in den Pneumatikraum. Die Hubbegrenzung bei der Entkupplung erfolgt durch den Sprengring (20) auf dem Dichtungskolben (12), die Hubbegrenzung bei Einrücken der Kupplung durch den Distanzring (21).

Im eingekuppelten Zustand (Drehmomentenfluß zum Rad eingeschaltet) werden die Mitnehmerklauen (24) des Klauentellers (8a) mit den Mitnehmerklauen (25) des Kupplungszylinders (9) der Schalteinheit verbunden. Hierbei wird der Kupplungszylinder direkt durch die Schraubenfeder (14) mit einer definierten Kraft gegen den Distanzring (21) gedrückt. Es wird hierbei in gekuppeltem Zustand eine axiale Belastung der Klauenteller vermieden, der Kupplungszylinder stützt sich über den Distanzring auf den Abschlußdeckel ab, der Drehmomentenschluß ist hierbei Achs- bzw. Doppelgelenkwelle → Kupplungszylinder → Zahnnabenring → Glockennabe → Radnabe.

Im ausgekuppelten Zustand (Drehmomentfluß zum Rad ausgeschaltet) sind die Mitnehmerklauen (24) der Klauenteller (8a) nicht mehr mit den Mitnehmerklauen (25) des Kupplungszylinders (9) der Schalteinheit verbunden. Diese Entkupplung wird durch die Druckluftbeaufschlagung des Pneumatikraumes (26) bewirkt. Durch den Luftdruck wird bei der Achse der Kupplungszylinder (9) über das Ausrücklager (10) durch die axiale Bewegung des Dichtzylinders (11) bei Überwindung der Federkräfte der Schraubenfeder (14) bis zum Anschlagring (20) bewegt, so die Mitnehmerklauen außer Eingriff gebracht und der Drehmomentfluß unterbrochen.

Zur Erhaltung des ausgekuppelten Zustandes muß ein Betriebsdruck innerhalb des Verdrängungsraumes aufrecht erhalten werden, der eine Kraft erzeugt, die über den Federkräften beim Auskupplungshub liegt.

## Patentansprüche

1. Vorrichtung zum wahlweisen Zu- und Abschalten des Drehmomentflusses zur Radnabe eines angetriebenen Kraftfahrzeugrades mittels Druckluft und Zuführung der Druckluft durch den stationären Radlagerzapfen in einen Pneumatikraum, wobei die Antriebswelle von der Radnabe mittels einer Kupplungseinrichtung trennbar ist und eine Schalteinheit vorgesehen ist, die über den Pneumatikraum beaufschlagt werden kann, die Rückstellkraft über Feder wirksam und die Schalteinheit in einer mit der Radnabe fest verbundenen Glockennabe angeordnet ist, dadurch gekennzeichnet, daß die Schalteinheit (9, 10, 11, 12) und der Pneumatikraum (26) zwischen Kegelrollenlagern (27, 28) angeordnet ist und der Pneumatikraum (26) über im Radlagerzapfen (15) angeordnete Zuleitungen (29, 30, 31) sowie über eine umlaufende Nut (35) und eine vertikale Öffnung (36) speisbar ist.

2. Vorrichtung nach Anspruch 1, dadurch gekennzeichnet, daß der Achswelle (8) einstückig ein Klauenteller (8a) mit Klauen (24) angeformt ist.

3. Vorrichtung nach Anspruch 1 oder 2, dadurch gekennzeichnet, daß durch Ausnehmungen (32), vorzugsweise gegenüberliegend, im Zylindermantel des Kupplungszylinders (9) Mantelsegmente gebildet sind, wobei die Ausnehmungen von ortsfesten Stegen (33) der Glockennabe (3) durchdrungen sind.

4. Vorrichtung nach einem oder mehreren der Ansprüche 1 bis 3, dadurch gekennzeichnet, daß die Achswelle (Doppelgelenkwelle) (8) in ihrem Endbereich einen Klauenteller (8a) aufweist.

5. Vorrichtung nach einem oder mehreren der Ansprüche 1 bis 4, dadurch gekennzeichnet, daß die Schalteinheit im wesentlichen aus dem Kupplungskörper (9), dem Kugellager (10), dem Dichtungszylinder (11) und der Rundringdichtung (17) besteht, wobei der Dichtungszylinder (11) auf dem Dichtungskolben (12) längsverschieblich angeordnet ist.

6. Vorrichtung nach einem oder mehreren der Ansprüche 1 bis 5, dadurch gekennzeichnet, daß der Pneumatikraum (26) mittels der Runddichtungen (16, 17, 18, 19) luft- und öldicht verschlossen ist.

7. Vorrichtung nach einem oder mehreren der Ansprüche 1 bis 6, dadurch gekennzeichnet, daß ein Zahnnabenring (4) und ein Abschlußdeckel (5), das Steckwellenlager (6) für das Zapfenende der Achswelle (8) aufnehmend, fest mit der Glockennabe (3) verbunden sind.

8. Vorrichtung nach einem oder mehreren der Ansprüche 1 bis 7, dadurch gekennzeichnet, daß ein Verschlußdeckel (7) mit dem Abschlußdeckel (5) fest verbunden ist und den Raum der Achswelle hermetisch verschließt.

9. Vorrichtung nach einem oder mehreren der Ansprüche 1–8, dadurch gekennzeichnet, daß zur Hubbegrenzung beim Ausrücken der Schalteinheit ein Sprengring (20) auf dem Dichtungskolben (12) angeordnet ist und zur Hubbegrenzung beim Ausrücken der Kupplung ein Distanzring (21) vorgesehen ist.

10. Vorrichtung nach einem oder mehreren der Ansprüche 1–9, dadurch gekennzeichnet, daß bei in Eingriffstellung der Kupplungsklauen (24, 25) der Kraftfluß von der Achswelle (8) über den Klauenteller (8a) sowie über eine Vielkeilverzahnung (37) unter der Zwischenschaltung des Zahnnabenringes (4) und der Glockennabe (3) auf die Radnabe (1) gegeben ist.

## Claims

1. A device for selectively switching on and off the flow of torque to the hub of a driven motor-vehicle wheel by means of compressed air and conveying the compressed air through the stationary wheel bearing journal into a pneumatic chamber, the driving shaft being separable from the wheel hub by means of a clutch device and a switching unit being provided which can be acted upon by way of the pneumatic chamber, the return force being effective by way of a spring and the switching unit being arranged in a bell-shaped hub securely connected to the wheel hub, characterized in that the switching unit (9, 10, 11, 12) and the pneumatic chamber (26) are arranged between tapered roller bearings (27, 28) and the pneumatic chamber (26) can be supplied by way of supply lines (29, 30, 31) arranged in the wheel bearing journals (15) and by way of a continuous groove (35) and a vertical opening (36).

2. A device according to Claim 1, characterized in that a jaw plate (8a) with jaws (24) is integrally formed on the axle shaft (8).

3. A device according to Claim 1 or 2, characterized in that jacket segments are formed by recesses (32), preferably in an opposed arrangement, in the jacket of the clutch cylinder (9), the recesses of stationary webs (33) of the bell-shaped hub (3) being continuous.

4. A device according to one or more of Claims 1 to 3, characterized in that the axle shaft (constant-velocity joint shaft) (8) has a jaw plate (8a) in its end region.

5. A device according to one or more of Claims 1 to 4, characterized in that the switching unit essentially comprises the clutch member (9), the ball bearing (10), the sealing cylinder (11) and the circular ring seal (17), the sealing cylinder (11) being longitudinally displaceable on the sealing piston (12).

6. A device according to one or more of Claims 1 to 5, characterized in that the pneumatic chamber (26) is sealed in an air-tight and oil-tight manner by means of the circular seals (16, 17, 18, 19).

7. A device according to one or more of Claims 1 to 6, characterized in that a toothed hub ring (4) and a closure cover (5), receiving the stub shaft hub (6) for the journal end of the axle shaft (8) are securely connected to the bell-shaped hub (3).

8. A device according to one or more of Claims 1 to 7, characterized in that a closure cover (7) is securely connected to the closure cover (5) and hermetically seals the chamber of the axle shaft.

9. A device according to one or more of Claims 1 to 8, characterized in that a circlip (20) is arranged on the sealing piston (12) in order to limit the stroke while disengaging the switching unit and a spacer ring (21) is provided in order to limit the stroke while disengaging the clutch.

10. A device according to one or more of Claims 1 to 9, characterized in that when the clutch jaws (24, 25) are in the engagement position the force flows onto the wheel hub (1) from the axle shaft (8) by way of the jaw plate (8a) and by way of a multiple-spline toothing (37) with the interposition of the toothed hub ring (4) and the bell-shaped hub (3).

**Revendications**

1. Dispositif pour établir et supprimer à volonté, au moyen d'air comprimé, la transmission du couple au moyeu d'une roue entraînée de véhicule automobile, et pour amener l'air comprimé à travers le tourillon fixe de la roue dans une chambre pneumatique, l'arbre d'entraînement étant susceptible d'être séparé du moyen de la roue par un moyen d'accouplement et une unité de commutation étant prévue qui peut être alimentée par l'intermédiaire de la chambre pneumatique, l'effort de rappel agissant par l'intermédiaire de ressorts et l'unité de commutation étant disposée dans un moyeu en forme de cloche solidaire du moyeu de la roue, dispositif caractérisé en ce que l'unité de commutation (9, 10, 11, 12) et la chambre pneumatique (26) sont disposées entre des paliers (27, 28) à rouleaux coniques, et la chambre pneumatique (26) est susceptible d'être alimentée par l'intermédiaire de canalisations (29, 30, 31) disposées dans le tourillon (15) de la roue ainsi que par l'intermédiaire d'une gorge périphérique (35) et d'un orifice vertical (36).

2. Dispositif selon la revendication 1, caractérisé en ce qu'un plateau (8a) muni de crabots (24) est façonné d'une seule pièce avec l'arbre d'essieu (8).

3. Dispositif selon la revendication 1 ou 2, caractérisé en ce que par l'intermédiaire d'évidements (32), de préférence placés les uns en face des autres, dans l'enveloppe cylindrique du cylindre d'accouplement (9), des segments d'enveloppe sont formés, les évidements étant traversés par des nervures fixes (33) du moyeu en forme de cloche (3).

4. Dispositif selon une ou plusieurs des revendications 1 à 3, caractérisé en ce que l'arbre d'essieu (arbre à double joint de cardan) (8) comporte sur sa partie terminale, un plateau à crabot (8a).

5. Dispositif selon une ou plusieurs des revendications 1 à 4, caractérisé en ce que l'unité de commutation est essentiellement constituée par le corps d'accouplement (9), le palier à billes (10), le cylindre d'étanchéité (11), et le joint d'étanchéité torique (17), le cylindre d'étanchéité (11) étant mobile longitudinalement sur le piston d'étanchéité (12).

6. Dispositif selon une ou plusieurs des revendications 1 à 5, caractérisé en ce que la chambre pneumatique (26) est fermée de façon étanche à l'air et à l'huile par les joints d'étanchéité toriques (16, 17, 18, 19).

7. Dispositif selon une ou plusieurs des revendications 1 à 6, caractérisé en ce qu'un anneau de moyeu cannelé (4) et un couvercle terminal (5) qui reçoit le palier d'arbre à emboîtement (6) pour l'extrémité du tourillon de l'arbre d'essieu (8), sont solidaires du moyeu en forme de cloche (3).

8. Dispositif selon une ou plusieurs des revendications 1 à 7, caractérisé en ce qu'un couvercle de fermeture (7) est fixé sur le couvercle terminal (5) et ferme hermétiquement l'espace où se trouve l'arbre d'essieu.

9. Dispositif selon une ou plusieurs des revendications 1 à 8, caractérisé en ce que pour limiter la course lors du débrayage de l'unité de commutation, un jonc (20) est disposé sur le piston d'étanchéité (12), tandis que pour limiter la course lors de l'embrayage de l'accouplement, il est prévu un anneau entretoise (21).

10. Dispositif selon une ou plusieurs des revendications 1 à 9, caractérisé en ce que, lorsque les crabots d'accouplement (24, 25) sont en prise, l'effort est transmis à partir de l'arbre d'essieu (8) au moyeu de roue (1) par l'intermédiaire du plateau à crabot (8a) ainsi que par l'intermédiaire d'une cannelure (37) avec interposition de l'anneau de moyeu cannelé (4) et du moyeu en forme de cloche (3).

Fig.1

# Fig.2